# EUROPEAN PATENT SPECIFICATION

(11) **EP 4 429 916 B1**
(45) Date of publication and mention of the grant of the patent: **11.11.2026**
(21) Application number: 23750265.3
(22) Date of filing: 07.02.2023
(51) Int. Cl.: B60P 3/025, E04H 3/26, B60P 1/02, E04H 3/28, A63J 1/00

(54) **MOBILE STAGE SYSTEM AND METHOD OF USE**
MOBILES BÜHNENSYSTEM UND VERFAHREN ZUR VERWENDUNG
SYSTÈME DE SCÈNE MOBILE ET PROCÉDÉ D' UTILISATION

(30) Priority: 07.02.2022 US 202263307479 P
(43) Date of publication of application: 18.09.2024
(73) Proprietor: Astra Stages, LLC, Pittsburg, KS 66762 (US)
(72) Inventor: ALLISON, Todd, N., Pittsburg, KS 66762 (US); HERTRICH, Gregory, P., Pittsburg, KS 66762 (US); PINGREE, James, E., Pittsburg, KS 66762 (US)
(74) Representative: Williams Powell
(86) International application number: PCT/US2023/012463
(87) International publication number: WO 2023/150367

(56) References cited:
- EP-A1- 0 645 279
- US-A1- 2012 277 010
- US-A1- 2013 067 829
- US-A1- 2015 107 164
- US-A1- 2016 009 213
- US-A1- 2021 009 024
- US-B1- 8 978 311
- US-B2- 8 544 213

## Description

### CROSS-REFERENCE TO RELATED APPLICATION

This application claims priority in U.S. Provisional Patent Application No. 63/307,479 Filed February 7, 2022.

### BACKGROUND OF THE INVENTION

### 1. Field of the Invention

The present invention relates generally to stages, and in particular to a mobile or portable stage for entertainment, instructional, educational and other presentations.

### 2. Description of the Related Art

EP0645279A1 discloses a folding stage that has a main platform on a wheeled support and with folding extensions on each side. The platform is extended by pairs of hinged plates (9, 10) operated by rams (14) and with stabilising stays (18) to assist the folding action. Existing mobile entertainment stages are transported by attachment to the appropriate vehicle for transport. Some may be transported by a bumper hitch, but many require a gooseneck type hitch. This limits the transport vehicle to a pickup truck or semi with adequate capacity to carry the total load of the mobile stage. Most of the mobile entertainment stages are around ten feet or greater in overall height, so they cannot be stored in a typical residential garage. Many of the mobile entertainment stages also implement hydraulic cylinders for erection of the stage floors and roof structure which can be costly when including the cost and additional weight of all the necessary hydraulic fittings, hose, reservoirs, motors and pumps. These electric motors or gas engines require the additional requirements of transporting gasoline, or electric hookup or possibly an electric generator depending on the deployment location. What is needed is a compact, easy to transport mobile stage option that removes these limitations.

Heretofore there has not been available a mobile stage with the advantages and features of the present invention.

### BRIEF SUMMARY OF THE INVENTION\

The invention is defined by the appended independent claim 1. Additional embodiments are defined in the dependent claims. A preferred embodiment of the present disclosure is a mobile entertainment stage which when deployed has a stage floor size of approximately twenty feet (6 m) by sixteen feet (4.87 m), a gross trailer weight of seven-thousand pound: (3175,15 Kg), an overall trailered height of six feet, eight inches (2 m), and a standard bumper hitch coupler allowing for a broader range of vehicles for towing. The stage front can be on either side of the stage. The trailered length of the invention is twenty-six feet (7-9 m) but includes a break away or fold away hitch to decrease the overall length to approximately twenty-three feet (7 m). The length, width and height of the invention allows it to be stored in many garages.

The preferred embodiment has an overall trailered width of one-hundred and two inches (2.59 m), so two four-foot-wide (1.22 m) floor extensions are stored on top of the main stage floor which is eight feet wide (2.44 m). The two floor extensions have rollers underneath to prevent damage to the main stage floor and for easily moving them outward to the deployed position, creating the sixteen-foot stage floor width (4.88 m). One stage-floor extension weighs approximately four-hundred pounds (181 kg) in the invention, leading to the implementation of a special tool to raise or lower the stage-floor extension.

The preferred embodiment has a pair of telescoping square tubings on both sides which serves to lock the trailer sides in the stage trailered position and can move outward on either side unlocking the trailer sides and become supports for the previously mentioned floor extension.

The side walls of the preferred embodiment when in the first, trail orientation become part of the roof structure when transformed into the second, deployed stage orientation. Since the side walls rotate outward to become part of the roof structure and weigh a considerable amount, gas springs are implemented on both sides to help reduce the amount of force required. When deployed, the roof structure is lifted or lowered by implementation of a scissor type mechanism by use of winches which are powered by twelvevolt direct current deep cycle batteries. The scissor type mechanism was implemented as an easy means of lifting the roof by a total of almost nine feet above the trailered floor height of around four feet. The roof structure is initially lifted slightly beyond the locked position for engagement of a scissor locking bar such that the winches are not supporting the entire roof load during a given event. When the scissor locking bar is supporting the roof structure, the winches are engaged to create slack in the winch cables.

It should be noted that these dimensions may vary while still providing a suitable mobile stage solution.

### BRIEF DESCRIPTION OF THE DRAWINGS

The drawings constitute a part of this specification and include exemplary embodiments of the present invention illustrating various objects and features thereof.
Fig. 1 is a three-dimensional isometric view of a transformable mobile stage system shown in a first, trailer orientation.
Fig. 2 is a three-dimensional isometric view thereof shown in a second, deployed stage orientation.
Fig. 3 is a front elevational view of the embodiment shown in the first, trailer orientation.
Fig. 3A is a detailed view taken about the circle of Fig. 3.
Fig. 4 is a front elevational view of the embodiment shown in the second, deployed stage orientation.
Fig. 4A is a detailed view taken about the circle of Fig. 4.
Fig. 4B is a detailed view taken about the circle of Fig. 4.
Fig. 5A is an elevational view of a left floor extension tool.
Fig. 5B is an elevational view of a right floor extension tool.
Fig. 6A is a top plan view about the arrows shown in Fig. 5A.
Fig. 6B is a top plan view about the arrows shown in Fig. 5B.
Fig. 7 is a right side elevational view of the embodiment shown in the first, trailer orientation.
Fig. 7A is a detailed view taken about the circle of Fig. 7.
Fig. 7B is a detailed view taken about the circle of Fig. 7.
Fig. 8 is a front elevational view of the embodiment shown in the second, deployed orientation including a stage floor extension element being deployed.
Fig. 8A is a detailed view taken about the circle of Fig. 8.
Fig. 9 is a front elevational view of the embodiment of Fig. 8 wherein the stage floor extension is in a second step.
Fig. 9A is a detailed view taken about the circle of Fig. 9.
Fig. 10 is a front elevational view of the embodiment of Fig. 9 wherein the stage floor extension is in a third step.
Fig. 10A is a detailed view taken about the circle of Fig. 10.
Fig. 11 is a right side elevational view of the embodiment shown in the first, trailer orientation showing corner tower couplers being deployed.
Fig. 11A is a detailed view taken about the circle of Fig. 11.
Fig. 12 is a side elevational view of a scissor lift element of the present invention.
Fig. 13 is a side elevational view of a lock bar element of the present invention.
Fig. 14 is a front elevational view of the embodiment shown in the second, deployed stage orientation wherein the scissor lift elements are engaged.
Fig. 14A is a detailed view taken about the circle of Fig. 14.
Fig. 14B is a detailed view taken about the circle of Fig. 14.
Fig. 15 is another front elevational view of the present invention.
Fig. 15A is a detailed view taken about the circle of Fig. 15.
Fig. 15B is a detailed view taken about the circle of Fig. 15.
Fig. 15C is a detailed view taken about the circle of Fig. 15.

### DETAILED DESCRIPTION OF THE PREFERRED EMBODIMENTS

### I. Introduction and Environment

As required, detailed aspects of the present invention are disclosed herein, however, it is to be understood that the disclosed aspects are merely exemplary of the invention, which may be embodied in various forms. Therefore, specific structural and functional details disclosed herein are not to be interpreted as limiting, but merely as a basis for the claims and as a representative basis for teaching one skilled in the art how to variously employ the present invention.

Certain terminology will be used in the following description for convenience in reference only and will not be limiting. For example, up, down, front, back, right and left refer to the invention as orientated in the view being referred to. The words, "inwardly" and "outwardly" refer to directions toward and away from, respectively, the geometric center of the aspect being described and designated parts thereof. Said terminology will include the words specifically mentioned, derivatives thereof and words of similar meaning.

### II. Preferred Embodiment Mobile Stage System

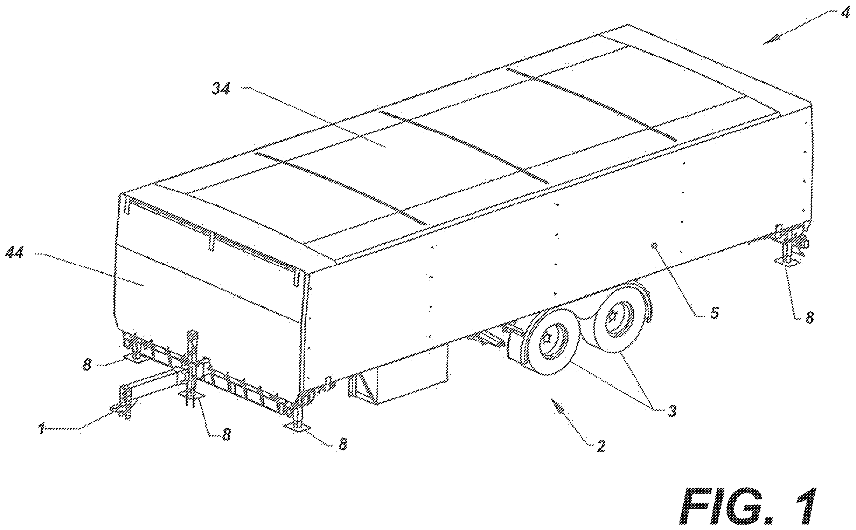

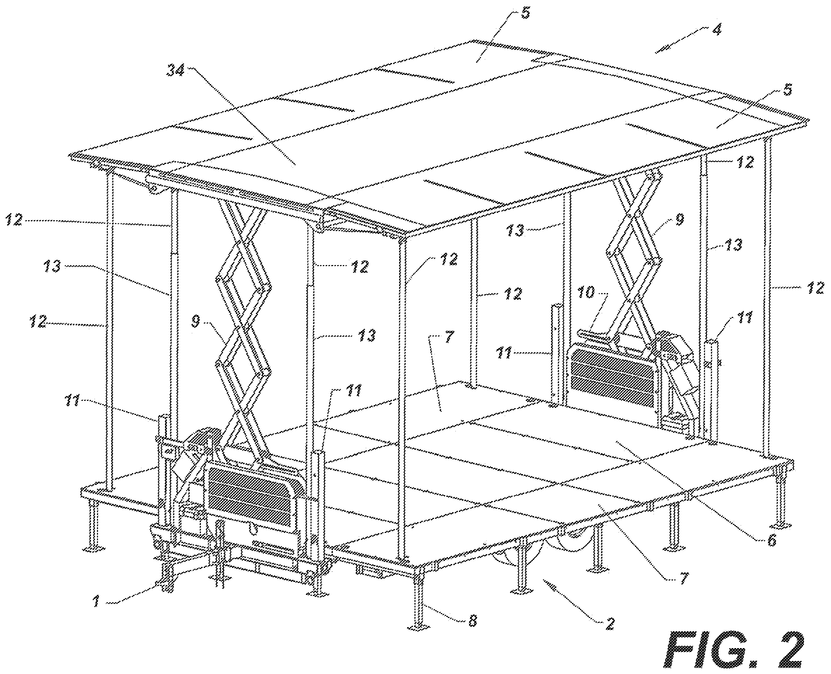

A mobile stage system is shown in Figs. 1-15C. The mobile stage system is transformable between a first, trailer orientation as shown in Fig. 1 and a second, deployed stage orientation as shown in Fig. 2. In the first orientation, the mobile stage system can be towed by any suitable vehicle. When in the second orientation, a secure and stable stage platform is provided, along with all necessary lightning, audio, and other elements readily included.

Fig. 1 shows the mobile stage system in the first, trailer orientation where the trailer 2 including a trailer hitch coupler 1 for towing the entire mobile stage system via a towing vehicle. The roof 4 and sides 5 of the trailer 2 seal the contents inside, providing weatherproof transport. A roof tarp 34 with a roof tarp end 44 can also be included within the roof 4. Also shown are the trailer wheels 3 and drop-leg jacks 8 for stabilizing the trailer 2 at a site.

Fig. 2 shows the mobile stage system in the second, deployed stage orientation where the trailer 2 provides a stage base with the various drop-leg jacks 8 preventing movement of the trailer. The mobile stage system roof 4 and roof tarp 34 form a covering of the stage along with the sides 5 which fold upwards and form part of the roof 4. Several roof down supports 11 and corner towers 12 with corner tower couplers 13 hold the roof 4 and sides 5 above the stage floor and stage floor extensions 7. Two scissor assemblies 9 lift the roof 4 and sides 5 into place.

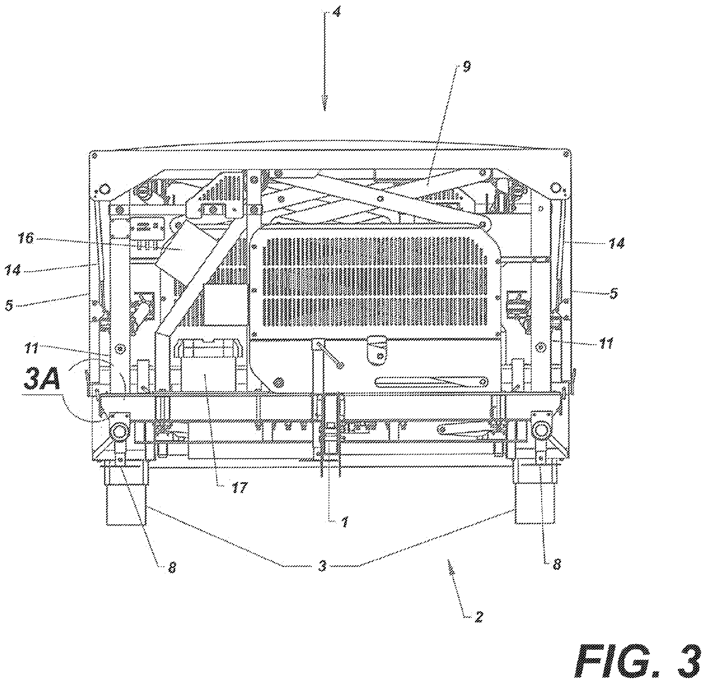

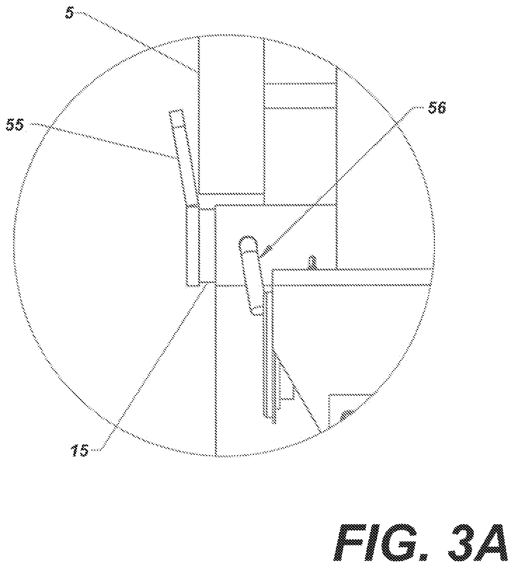

Fig. 3 shows the front end of the mobile stage system with the trailer 2 in the first, trailer orientation. The drop-leg jacks 8 are retracted such that the wheels 3 can contact the ground so that the entire trailer 2 can roll. Gas springs 14 are located on either side of the stage inside of the sides 5. A winch 16 and battery 17 are included as well to power and control the scissor assemblies 9. Fig. 3A shows the bottom of the side 5 which includes a telescoping tubing 15 which extend out away from the trailer 2 to form the stage floor. An extension stop 55 prevents these from extending prematurely, and a clevis pin 56 is also included for additional security.

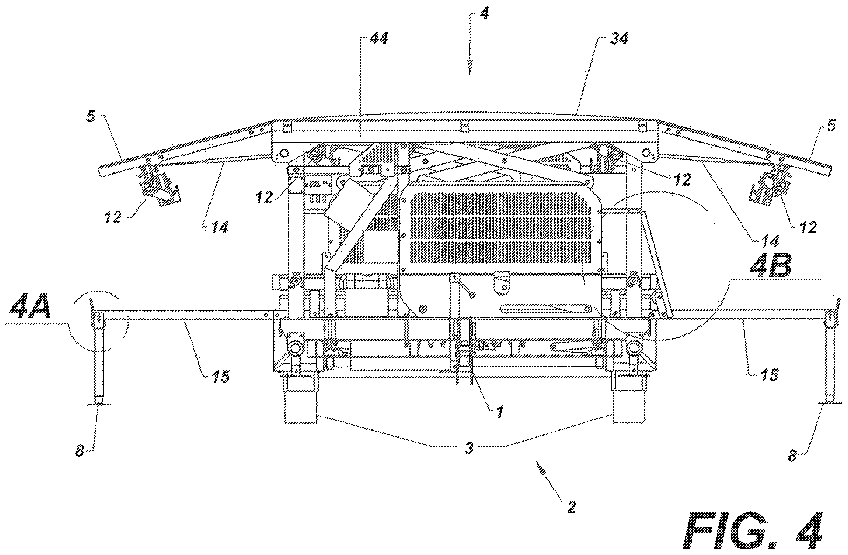

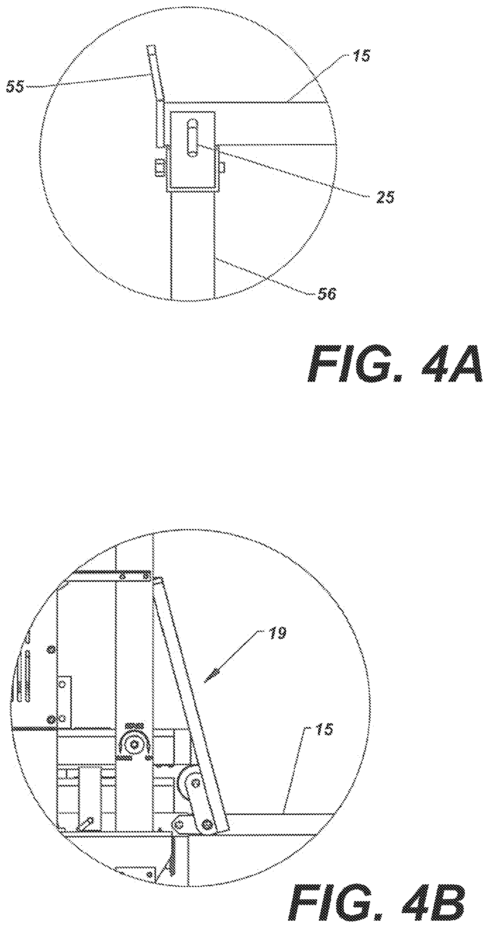

In Fig. 3A, the side/floor extension stop 55 is welded to the telescoping tube 15 and positioned relative to the trailer 2 with the telescoping tube clevis pin 56. This detail is typical on both sides and front and rear of the trailer 2. The sides 5 are held in the position indicated. Referring also to Fig. 4, the sides 5 are unlocked by the removal of the telescoping tube clevis pin 56 allowing the telescoping tube 15 to move outward as seen in Figure 4. Moving the telescoping tubing outward unlocks the sides 5 from the position shown in Fig. 3. In Fig. 3 it should be noted that the roof 4 in the down position is supported by a total of four roof down supports 11 (two shown) at each corner of the mobile stage.

Fig. 4 shows the stage being partially deployed, where the two telescoping tubing elements 15 on either side extend out an where the drop-leg jacks 8 are extended to secure the stage floor. Fig. 4A shows a second clevis pin 25. Fig. 4B shows the right floor extension tool 18 as it interfaces with the telescoping tube element 15 on that side, which functions to extend the telescoping tube element 15 to expand the floor of the stage.

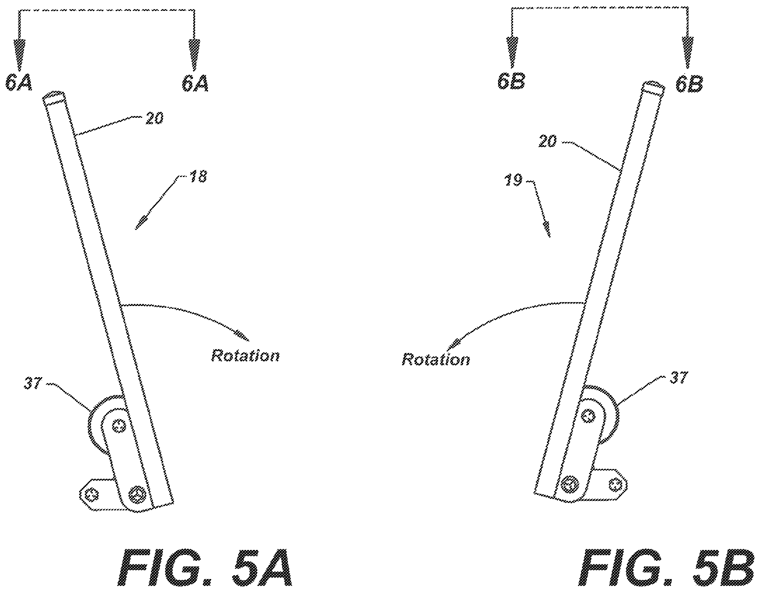

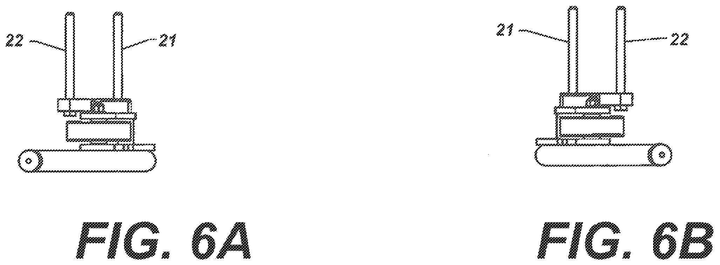

In Fig. 4, the sides 5 are rotatable about a pivot point on the roof 4. The sides 5 may rotate to some position as indicated due to implementation of a total of ten gas springs 14 (five gas springs 14 per side 5). In Fig. 4A, the telescoping tube 15 is moved outward to a point where the left floor extension tool 19 (shown separately in Figure 5B) can be fully inserted through the holes previously occupied by the telescoping tube clevis pin 56 and an additional hole in the telescoping tube 15. The right floor extension tool 18 is installed at the other end of the trailer 2 (refer to Fig. 6). The right and left floor extension tools, 18 and 19 respectively, are oriented as shown in Fig. 4B. Additionally in Fig. 4, one roof tarp end 44 of the roof tarp 34 is rolled upward and secured by additional features of the roof tarp 34. Similarly, this would be done on the other end of the mobile stage. Figs. 5A and 5B show the left 18 and right 19 floor extension tools, respectively. Each includes a roller 37 and a floor tool lever 20. Figs. 6A and 6B show the respective top plan view of Figs. 5A and 5B, including floor tool pivot pins 21 and floor tool stationary pins 22.

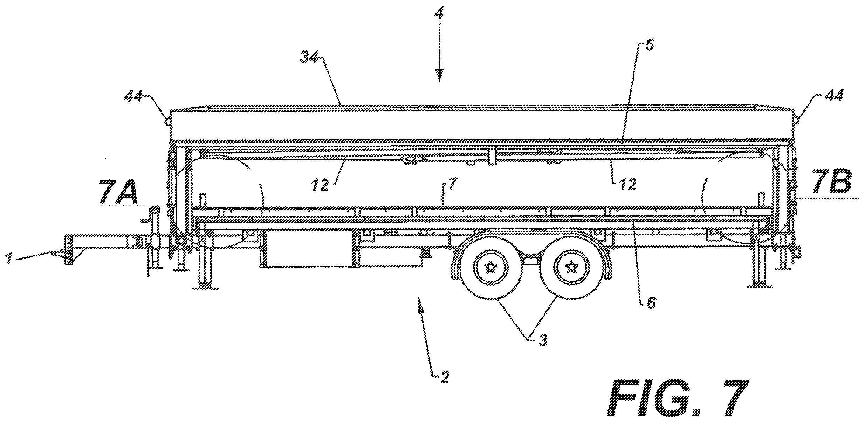

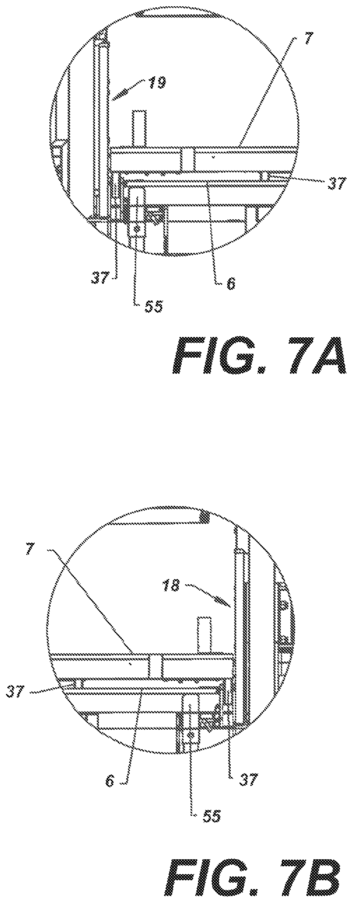

Fig. 7 shows a right side elevational view of the mobile stage system in the first, trailer orientation being transformed into the second, deployed stage orientation wherein the telescoping tubes 15 have expanded to provide for stage floor extensions 7 to be installed alongside the main stage floor 6. Fig. 7A shows additional detail about the right floor extension tool 18 with roller 37 interfacing with the extension stop 55 and the floor extension 7 and main stage floor. Fig. 7B mirrors this and shows the left side extension tool 19. On both floor extension tools, the roller 37 is indicated. In a preferred embodiment, there are ten rollers 37 attached to the underside of each floor extension 7 which contact the main stage floor 6 as shown (two indicated). The rollers 37 mounted to the stage floor extensions 7 are such that these can be rolled on the main stage floor 6 in one direction (in or out of the page shown in Fig. 7)

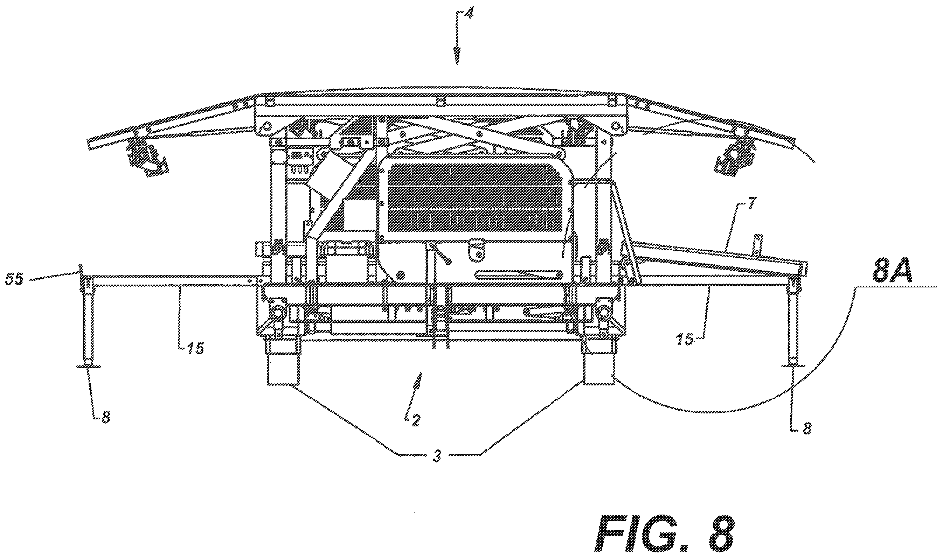

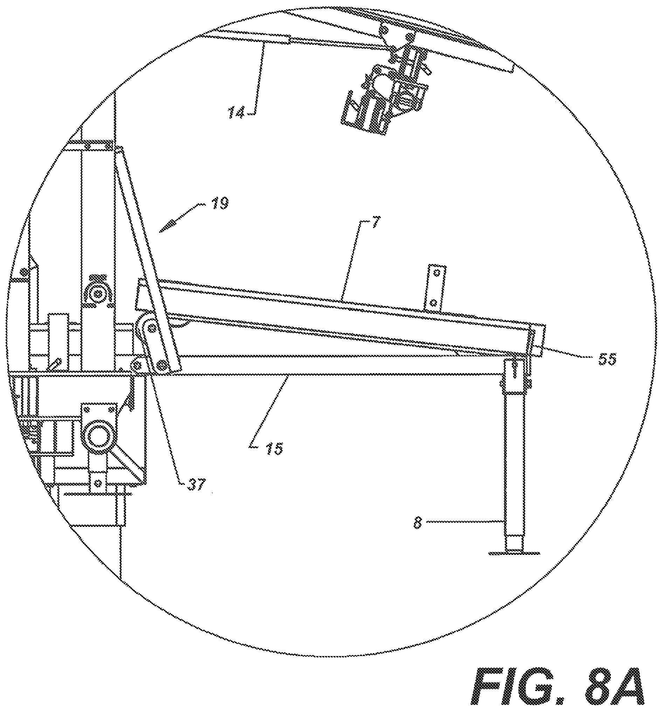

Fig. 8 shows the floor extension 7 being installed atop the telescoping tubing 15. Fig. 8A shows more detail, including the sides 5 being lifted by the gas springs 14, the right floor extension tool 18 rolling along the telescoping tube 15, with the floor extension 7 being placed adjacent to the extension stop 55. Only one stage floor extension 7 is shown rolled out as previously mentioned to the final point where the contact is made between the stage floor extension 7, and both the telescoping tubing 15 and the side/floor extension stop 55. During the process of moving the stage floor extension 7 outward, a point is reached where it will want to easily rotate downward based on the rollers 37 of the right and left floor extension tools, 18 and 19 respectively, due to the weight of the stage floor extension 7. This downward rotation may occur before contact is made with the side/floor extension stop 55. The stage floor extension 7 is easily pulled outward sliding on the telescoping tube 15 until in the final position shown in Fig. 8.

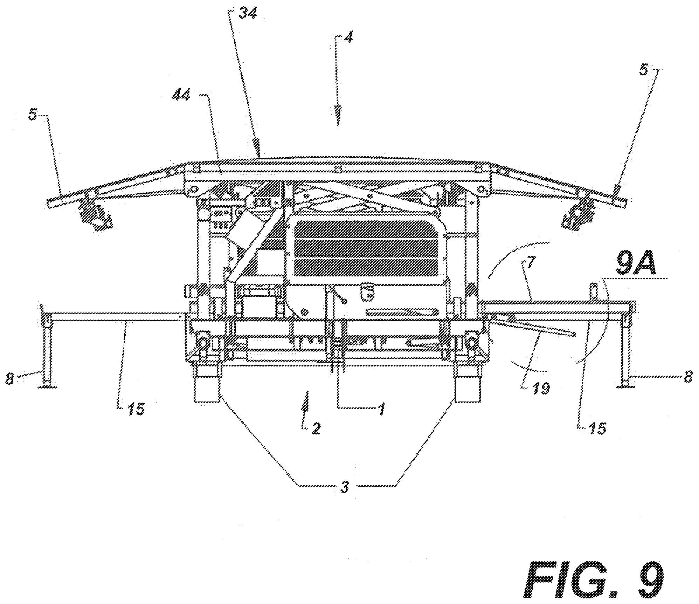

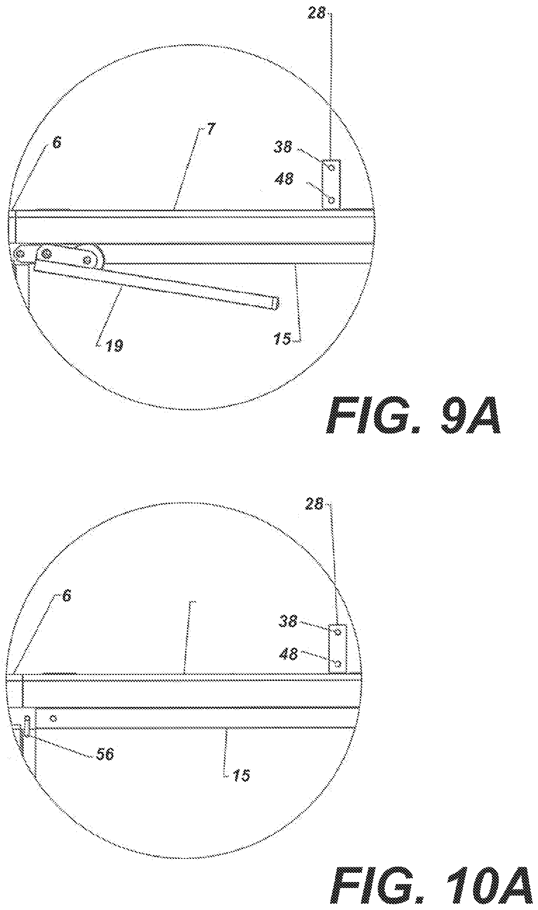

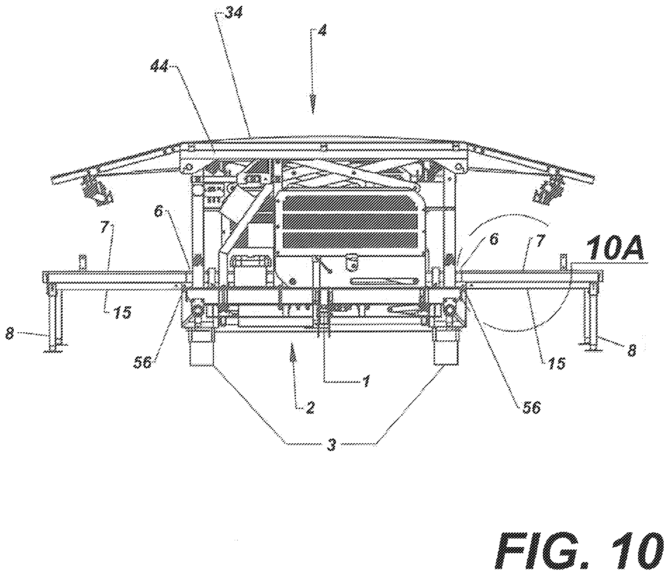

Fig. 9 shows the floor extension 7 installed and the right floor extension tool 19 rotated beneath the floor extension. Fig. 9A shows this in more detail, including a floor tube 28 with a pitch hole down 38 and a pitch hole up 48. Similarly, Fig. 10 shows the clevis pin 56 locking away the right floor extension tool 18, with Fig. 10A showing this in more detail. Both right and left floor extension tools, 18 and 19 respectively, are rotated as indicated in Fig. 5 to lower the stage floor extension 7 onto the telescoping tube 15 such that it is parallel to the main stage floor 6 and the full weight of the stage floor extension 7 is held by the telescoping tube 15. At this point, the right and left floor extension tools, 18 and 19 respectively, can be removed and replaced with the previously removed telescoping tube clevis pin 56 as shown in Fig. 10A. Inserting the pin 56 as shown will not allow the telescoping tube to move outward further from the trailer 2. The same procedure is followed on the other side of the trailer 2 resulting in both stage floor extensions 7 being parallel to the main stage floor 6. Beginning with Fig. 4, a drop-leg jack 8 is indicated at the end of the telescoping tube 15 held in place with a clevis pin 25. This is typical on all four of the telescoping tubes 15 and are used to support additional loading and level the stage floor extensions 7. In fact, after the stage floor extensions 7 are as shown in Fig. 10, three additional drop-leg jacks 8 are attached to each stage floor extension 7 with clevis pins 25 for leveling and load bearing.

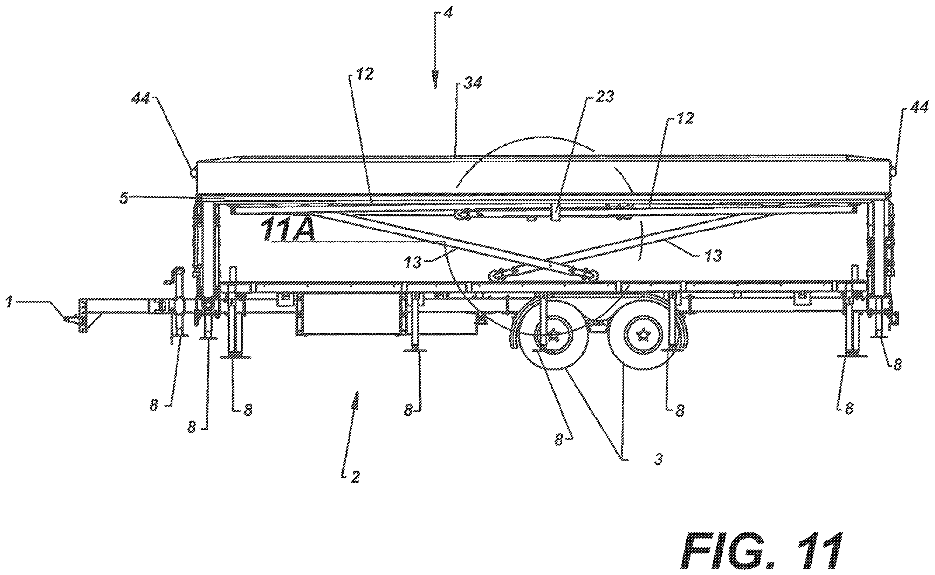

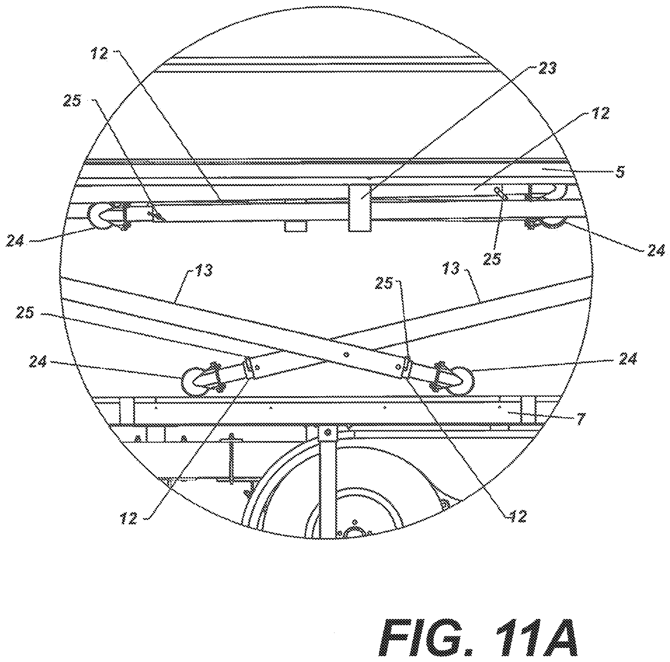

Fig. 11 shows the trailer 2 being transformed with the corner tower couplers 13 including roller assemblies 24 (as shown in Fig. 11A). A corner tower hanger 23 is connected two the corner towers 12 which can be detached and connected to the corner tower couplers 13 as the roof 4 is raised. Clevis pins 25 secure the roller assemblies 24 to the bottom of the corner tower couplers 13. The corner towers 12 also have roller assemblies 24 secured via clevis pins 25.

In a preferred embodiment, there are a total of eight corner towers 12 permanently attached to the roof 4 and sides 5. The corner towers 12 rotate and pivot relative to the roof 4. In the mobile stage trailered position, all eight corner towers 12 are supported by a total of four corner tower hangers 23 (two corner towers 12 per corner tower hanger 23). All the corner towers 12 have a roller assembly 24 attached to the free end by use of a clevis pin 25 as shown. Roof 4 corner towers 12 also have a corner tower coupler 13 as indicated. In Fig. 11, the four corner towers 12 have been removed from the roof 4 down to where the roller assembly 24 contacts the stage floor 6 (only two visible). The remaining four corner towers 12 are shown in Fig. 11A supported by the corner tower hanger 23 on the sides 5. Before the roof 4 is raised, the remaining corner towers 12 are lowered to the stage floor extensions 7. The four corner tower hangers 23 are basically centered between the front and back of the roof 4 and sides 5 as indicated in Figure 6 and may be removed and stored prior to raising the roof 4.

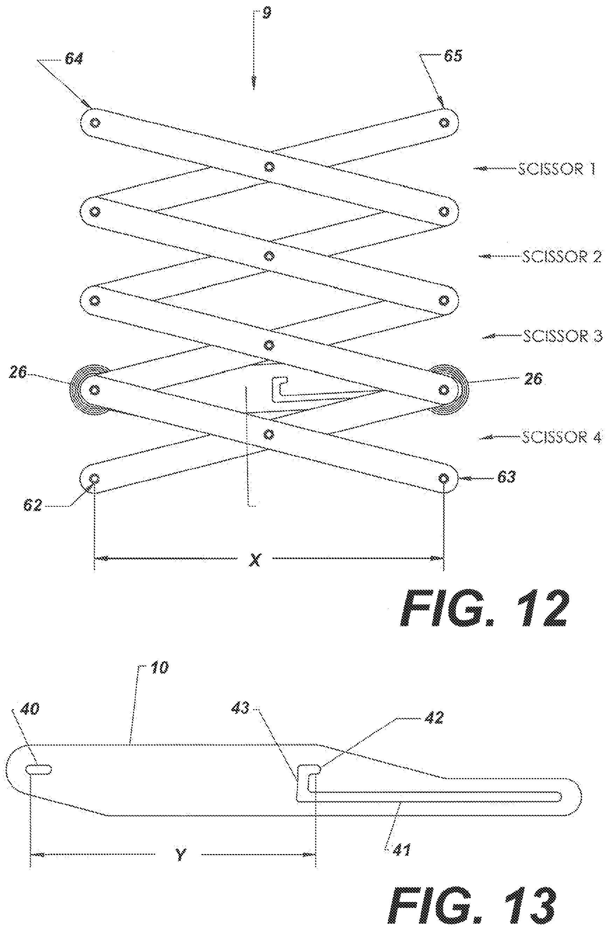

Fig. 12 shows one of the scissor assemblies 9 which includes at least four scissors. Winch cable pulleys 26 are connected between scissor three and scissor four. The bottom end of the scissor assembly includes an attachment 62 to the trailer 2, and a roller 63 which rolls along the trailer 2. Similarly, the top end of the scissor assembly 9 includes an attachment 64 to the roof 4 and a roller 65 for rolling along the roof 4. This allows the scissor to extend and contract as the scissor raises. Dimension "X" corresponds to the scissor assembly 9 when the mobile stage is in the first, trailer orientation.

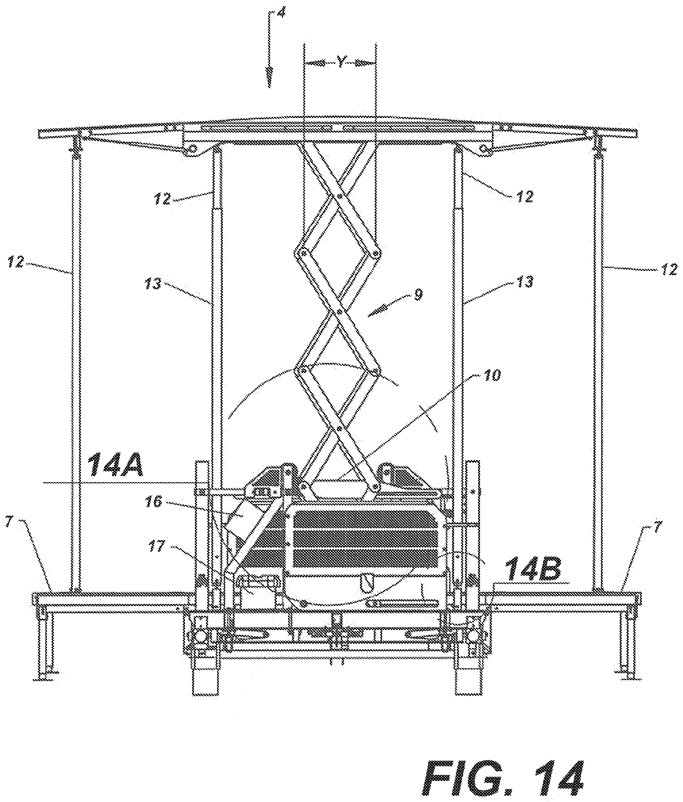

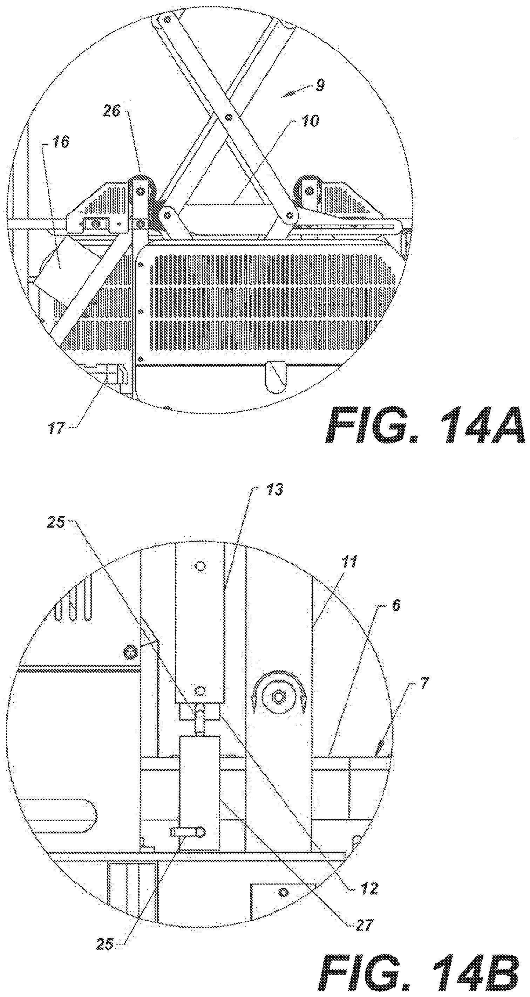

Referring to Figs. 12 and 14A, a winch 16 is shown with two additional winch cable pulleys 26. The winch cable pulleys winch 16 are fixed to the trailer 2. The winch 16 spools a winch cable in or out based on power supplied by a battery 17 providing sufficient force to move the scissor assembly 9. The winch cable (not shown) is fed over one winch cable pulley down to a second winch pulley (refer to Fig. 12), over and around a third winch pulley, back to a fourth winch pulley, up and around a fifth winch pulley to be anchored at some point on the trailer 2. There are two winches 16 and batteries 17 to operate the scissor assemblies 9. The winches are powered separately such that corrections can be made during lifting or lowering the roof 4 and sides 5.

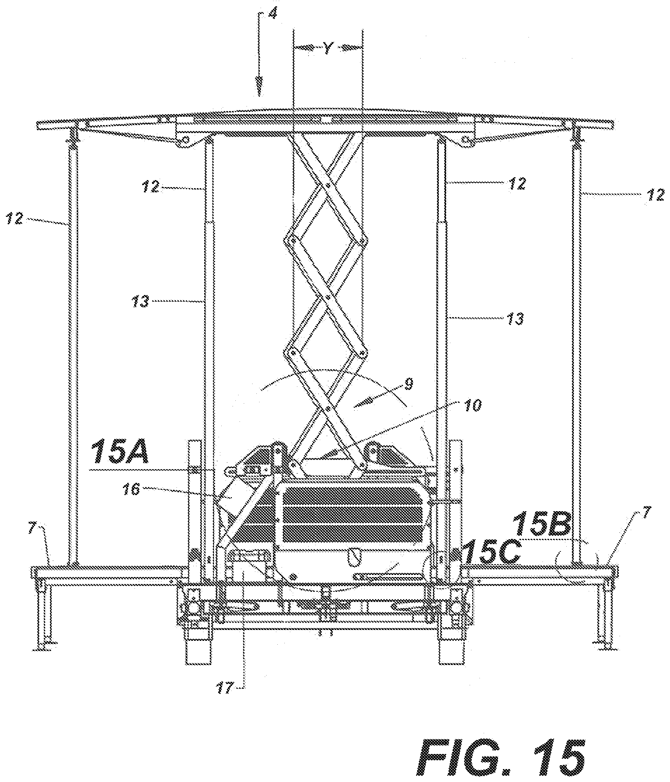

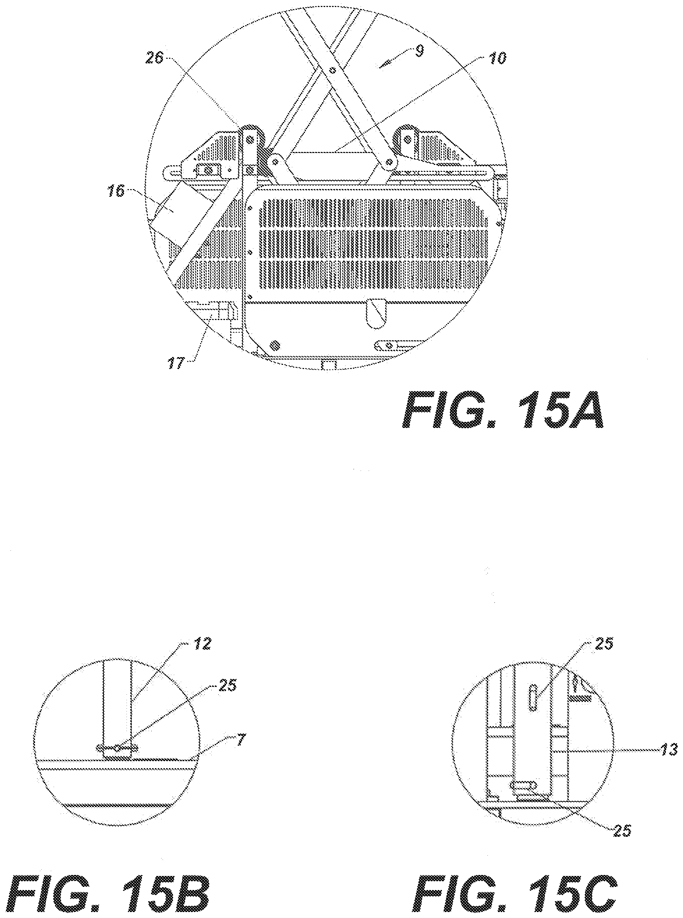

Fig. 13 shows a lock bar, including slots 40, 41, 42, 43. These slots coincide with the pins of the scissor lift assembly 9 and lock it out as described below. When the scissor assembly 9 is as shown in Fig. 12 at dimension "X", the scissors move to some extent through slot 40 and mainly through slot 41. As the scissor assembly 9 moves from the larger dimension "X" to the smaller dimension "Y", the scissor assembly 9 grows in height. At a dimension less than dimension "Y", the lock bar 10 will tend to pivot downward on the scissor assembly 9 corresponding to scissor movement in slot 43. Once the lock bar 10 is horizontal, i.e., level to the stage floor 6, the scissor movement is reversed riding in slot 42 until no further movement is possible. When no more movement of the scissors is possible, the scissor assembly 9 is locked in place by the lock bar 10. In the scissor locked position, the roof 4 is in the position indicated in Figure 2 and defined by the dimension "Y". Dimension "Y" is also shown in Figs. 14 and 15 for reference. For lowering the roof 4 down to the trailered position (Fig. 1), the scissor assembly 9 moves to a dimension less than dimension "Y", i.e., raising roof 4 to a point where the operator can move the lock bar 10 such that the scissors move down in slot 43 to move in slot 41. This would be performed on both scissor assemblies 9.

While the roof 4 is being raised, the roller assemblies 24 attached to the corner towers 12 rolls on top of the main stage floor 6 or stage floor extensions 7. Once the scissor assemblies 9 are locked by the lock bars 10, the roller assemblies 24 are removed from the four corner towers 12 that are attached to the roof 4 by holding the corner tower coupler 13 in place, remove the clevis pin 25 to allow the roller assembly 24 to be removed and re-installing the clevis pin 25 to support the corner tower coupler 13 to the corner tower 12 (see also Fig. 14B).

Fig. 14 shows a front elevational view of the stage shown in a nearly fully deployed stage orientation with the scissor assembly 9 fully extended upwardly to raise the roof 4, roof tarp 34, and sides 5 above the trailer 2, including main stage floor 6 and floor extensions 7. Fig. 14A shows the lock bar 10 which connects to the scissor assembly 9 and locks it out, physically preventing it from falling. Fig. 14B shows how the clevis pins 25 lock out the corner tower couplers 13 and the corner towers 12 via the stage tube 27.

In Fig. 14B, one of the four corner towers 12 is shown with the corner tower coupler 13 held by the clevis pin 25. Also shown is the stage tube 27 which is attached to the trailer 2 and has a clevis pin 25 which should be removed first. The corner tower 12 and coupler 13 should be rotated aligning the holes as shown in Fig. 14B. While holding the corner tower coupler 13, remove the clevis pin 25 on the corner tower 12 and lower the corner tower coupler 13 onto the stage tube 27. Insert both clevis pins 25, one through the corner tower coupler 13 and the stage tube 27, and one through the corner tower coupler 13 and the corner tower 12 (see Fig. 15C). Repeat this on the remaining four corner towers 12 attached to the roof 4.

Fig. 15 shows a front elevational view of the stage shown in a fully deployed stage orientation. Figs. 15A, 15B, and 15C show additional details locking out the various elements.

In Fig. 15B, a corner tower 12 attached to one of the sides 5 is shown attached to the stage floor extension 7 with a clevis pin 25. As shown in Fig. 15B, and referring to Fig. 10A, the corner tower 12 is attached to the stage floor extension 7 through hole 48 in floor tube 28 which creates a pitch down orientation of the side 5, i.e., the side 5 is lower at the corner tower 12 than at the roof 4. The floor tube 28 is mounted to the stage floor extensions 7 directly below each corner tower 12 attached to the sides 5. If the corner tower 12 were attached with the clevis pin 5 through hole 38 in floor tube 28, the result would have been a pitch up condition, i.e., the side 5 at the corner tower 12 position would be higher than that at roof 4.

The tower lifting system is comprised of mast towers that are lifted by a 6ft-throw solid square hydraulic ram that moves the towers in location in 6ft increments with each tower being pinned in position as they are moved into place. There are multiple advantages to this system. First, the towers go up rigid reducing the amount lean that occurs compared to other lifting systems. Not only is this safer, but this rigidity is required for one of the other new design features, a new spanner beam deployment system. Furthermore, the new tower design uses a (relatively) small 6ft throw hydraulic ram. By using a smaller, simple, single-stage cylinder, the design eliminates the need to use a large multistage cylinder and/ or another type of drive system. This reduces manufacturing cost, maintenance cost, weight, complexity, and stress on the hydraulic system. It also increases the useful life of the lift system and its safety of the stage during deployment.

The mobile stage can be configured as a trailer or a standalone vehicle. Motive power can be provided by selfpropelled vehicles for over-the-road transport, by draft animals, e.g., in a horse-drawn configuration, and by individuals. Moreover, in the first, trailer orientation, the mobile stage can be stored between events and deployments. In addition, should the batteries 17 be depleted, the mobile stage can be fully deployed or trailered manually with the tools supplied with the winch 16.

## Claims

1. A mobile stage system comprising:
a mobile stage assembly configured to be transformed from a first, trailer orientation to a second, deployed stage orientation;
a roof comprising a roof tarp having roof tarp ends, said roof connected to a pair of sides configured to be folded down in said first, trailer orientation and wherein said pair of sides are further configured to be rotated upwards to form a roof portion via a pair of gas cylinders when transformed into said second, deployed stage orientation;
a trailer comprising a stage floor and a trailer hitch;
a pair of scissor assemblies each comprising a plurality of winch pulleys, each one of said pair of scissor assemblies connected to a respective winch powered by a respective battery;
a plurality of drop-leg jacks connected to said trailers, each of said plurality of drop-leg jacks configured to transform from a first, retracted orientation when said mobile stage assembly is in said first, trailer orientation, to a second, extended orientation when said mobile stage assembly is in said second, deployed stage orientation;
a pair of lock bars, each one of said pair of lock bars configured to interface with a respective one of said pair of scissor assemblies;
a plurality of corner towers each comprising a removable roller assembly, wherein each one of said plurality of corner towers are configured to roll atop said stage floor until said pair of scissor assemblies are locked out via said pair of lock bars, after which said removable roller assemblies are configured to be removed to secure each respective one of said plurality of corner towers to a respective on of a plurality of tower couplers affixed to said stage floor; and
wherein said pair of lock bars are configured to lock out said pair of scissor assemblies, such that said roof is secured above said stage floor via said pair of scissor assemblies and said plurality of corner towers, thereby forming said second, deployed stage orientation.

2. The system of claim 1, further comprising:
each of said pair of lock bars comprising a first slot, a second slot, a third slot, and a fourth slot;
wherein said first slot, said third slot, and said fourth slot are horizontally oriented along each respective one of said pair of lock bars;
wherein said third slot is vertically oriented to join said second slot and said fourth slot, forming a continual opening within each respective one of said pair of lock bars; and
each one of said pair of lock bars configured to lock the respective one of said pair of scissor assemblies at a width less than their original width when in said first, trailer orientation via said first slot, said second slot, said third slot, and said fourth slot.

3. The system of claim 1, further comprising:
at least one stage floor extension configured to be placed adjacent to said stage floor;
said stage floor extension comprising a floor extension tool and a telescoping tube;
said stage floor extension configured to be rolled out and placed adjacent to said stage floor via said floor extension tool and said telescoping tube;
said stage floor extension tool configured to be removed and replaced with a clevis pin configured to secure said stage floor extension into place parallel with said stage floor; and
an extension stop configured to secure said stage floor extension at a distal end thereof, a proximal end thereof being placed adjacent to said stage floor.

4. The system of claim 1, further comprising;
said stage floor having a size of twenty feet by sixteen feet;
said mobile stage assembly comprising an overall trailered height of six feet, eight inches when in said first, trailer orientation;
said mobile stage assembly further comprising a trailered length of twenty-six feet when in said first, trailer orientation; and
said mobile stage assembly further comprising a standard bumper hitch coupler.

5. The system of claim 4, wherein said bumper hitch coupler is configured to be stowed away, thereby decreasing said trailered length to twenty-three feet.

## Patentansprüche

1. Mobiles Bühnensystem, umfassend:
eine mobile Bühnenanordnung, die dazu ausgelegt ist, von einer ersten Anhängerausrichtung in eine zweite, aufgebaute Bühnenausrichtung umgewandelt zu werden;
ein Dach, umfassend eine Dachplane mit Dachplanenenden, wobei das Dach mit einem Paar von Seitenteilen verbunden ist, die dazu ausgelegt sind, in der ersten Anhängerausrichtung heruntergeklappt zu werden, und wobei das Paar von Seitenteilen ferner dazu ausgelegt ist, bei der Umwandlung in die zweite, aufgebaute Bühnenausrichtung mittels eines Paars von Gaszylindern nach oben geschwenkt zu werden, um einen Dachabschnitt zu bilden;
einen Anhänger, umfassend einen Bühnenboden und eine Anhängerkupplung;
ein Paar von Scherenanordnungen, jeweils umfassend eine Mehrzahl von Windenseilrollen, wobei jede des Paars von Scherenanordnungen mit einer jeweiligen Winde verbunden ist, die durch eine jeweilige Batterie mit Strom versorgt wird;
eine Mehrzahl von mit den Anhängern verbundenen Abstellstützen, wobei jede der Mehrzahl von Abstellstützen dazu ausgelegt ist, von einer ersten, zurückgezogenen Ausrichtung, wenn sich die mobile Bühnenanordnung in der ersten Anhängerausrichtung befindet, in eine zweite, ausgefahrene Ausrichtung überführt zu werden, wenn sich die mobile Bühnenanordnung in der zweiten, aufgebauten Bühnenausrichtung befindet;
ein Paar von Verriegelungsstangen, wobei jede des Paars von Verriegelungsstangen dazu ausgelegt ist, mit einer jeweiligen des Paars von Scherenanordnungen zusammenzuwirken;
eine Mehrzahl von Ecktürmen, jeweils umfassend eine abnehmbare Rollenanordnung, wobei jeder der Mehrzahl von Ecktürmen dazu ausgelegt ist, auf dem Bühnenboden zu rollen, bis das Paar von Scherenanordnungen mittels des Paars von Verriegelungsstangen arretiert ist, wonach die abnehmbaren Rollenanordnungen dazu ausgelegt sind, entfernt zu werden, um jeden der Mehrzahl von Ecktürmen an jeweils einer aus einer Mehrzahl von am Bühnenboden befestigten Turmkupplungen zu sichern; und
wobei das Paar von Verriegelungsstangen dazu ausgelegt ist, das Paar von Scherenanordnungen zu arretieren, so dass das Dach mittels des Paars von Scherenanordnungen und der Mehrzahl von Ecktürmen über dem Bühnenboden gesichert ist, wodurch die zweite, aufgebaute Bühnenausrichtung gebildet wird.

2. System nach Anspruch 1, ferner umfassend:
jede des Paars von Verriegelungsstangen, umfassend einen ersten Schlitz, einen zweiten Schlitz, einen dritten Schlitz und einen vierten Schlitz;
wobei der erste Schlitz, der dritte Schlitz und der vierte Schlitz entlang des jeweiligen des Paars von Verriegelungsstangen horizontal ausgerichtet sind;
wobei der dritte Schlitz vertikal ausgerichtet ist, um den zweiten und den vierten Schlitz miteinander zu verbinden und innerhalb des jeweiligen des Paars von Verriegelungsstangen eine durchgehende Öffnung zu bilden; und
wobei jede des Paars von Verriegelungsstangen dazu ausgelegt ist, die jeweilige des Paars von Scherenanordnungen mittels des ersten, des zweiten, des dritten und des vierten Schlitzes bei einer Breite zu arretieren, die geringer als deren ursprüngliche Breite in der ersten Anhängerausrichtung ist.

3. System nach Anspruch 1, ferner umfassend:
mindestens eine Bühnenbodenverlängerung, die dazu ausgelegt ist, angrenzend an den Bühnenboden platziert zu werden;
die Bühnenbodenverlängerung, umfassend ein Bodenverlängerungswerkzeug und ein Teleskoprohr;
wobei die Bühnenbodenverlängerung dazu ausgelegt ist, mittels des Bodenverlängerungswerkzeugs und des Teleskoprohrs ausgerollt und angrenzend an den Bühnenboden platziert zu werden;
wobei das Bühnenbodenverlängerungswerkzeug dazu ausgelegt ist, entfernt und durch einen Gabelkopfbolzen ersetzt zu werden, der dazu ausgelegt ist, die Bühnenbodenverlängerung parallel zu dem Bühnenboden an Ort und Stelle zu sichern; und
einen Verlängerungsanschlag, der dazu ausgelegt ist, die Bühnenbodenverlängerung an ihrem distalen Ende zu sichern, wobei ihr proximales Ende angrenzend an den Bühnenboden platziert ist.

4. System nach Anspruch 1, ferner umfassend:
wobei der Bühnenboden eine Größe von zwanzig Fuß x sechzehn Fuß hat;
die mobile Bühnenanordnung, umfassend eine Gesamthöhe von sechs Fuß, acht Zoll in der ersten Anhängerausrichtung;
die mobile Bühnenanordnung, ferner umfassend eine Länge von sechsundzwanzig Fuß in der ersten Anhängerausrichtung; und
die mobile Bühnenanordnung, ferner umfassend einen Standardkupplungskopf für eine Stoßfänger-Anhängerkupplung.

5. System nach Anspruch 4, wobei der Kupplungskopf der Stoßfänger-Anhängerkupplung dazu ausgelegt ist, verstaut zu werden, wodurch die Länge in der Anhängerausrichtung auf dreiundzwanzig Fuß verringert wird.

## Revendications

1. - Système de scène mobile comprenant :
un ensemble scène mobile configuré pour passer d'une première orientation, celle d'une remorque, à une seconde orientation, celle d'une scène déployée ;
un toit comprenant une bâche de toit ayant des extrémités de bâche de toit, ledit toit étant relié à une paire de côtés configurés pour être pliés vers le bas dans ladite première orientation de remorque, et les côtés de ladite paire est en outre configurés pour être pivotés vers le haut afin de former une partie de toit à l'aide d'une paire de vérins à gaz lors du passage dans ladite seconde orientation de scène déployée ;
une remorque comprenant un plancher de scène et un attelage de remorque ;
une paire d'assemblages en ciseaux comprenant chacun une pluralité de poulies de treuil, chacun desdits assemblages en ciseaux de ladite paire étant relié à un treuil respectif alimenté par une batterie respective ;
une pluralité de béquilles à jambe tombante reliées auxdites remorques, chacune de ladite pluralité de béquilles à jambe tombante étant configurée pour passer d'une première orientation rétractée, lorsque ledit ensemble scène mobile est dans ladite première orientation de remorque, à une seconde orientation déployée, lorsque ledit ensemble scène mobile est dans ladite seconde orientation de scène déployée ;
une paire de barres de verrouillage, chacune desdites barres de verrouillage de ladite paire étant configurée pour s'interfacer avec l'un respectif des assemblages en ciseaux de ladite paire ;
une pluralité de tours d'angle comprenant chacune un ensemble roulette amovible, chacune de ladite pluralité de tours d'angle étant configurée pour rouler sur ledit plancher de scène jusqu'à ce que ladite paire d'assemblages en ciseaux soit verrouillée au moyen de ladite paire de barres de verrouillage, après quoi lesdits ensembles roulettes amovibles sont configurés pour être retirés afin de fixer chacune respective de ladite pluralité de tours d'angle à l'un respectif d'une pluralité de coupleurs de tour fixés audit plancher de scène ; et
dans lequel ladite paire de barres de verrouillage est configurée pour verrouiller ladite paire d'assemblages en ciseaux, de telle sorte que ledit toit soit fixé au-dessus dudit plancher de scène par l'intermédiaire de ladite paire d'assemblages en ciseaux et de ladite pluralité de tours d'angle, formant ainsi ladite seconde orientation de scène déployée.

2. - Système selon la revendication 1, comprenant en outre :
chacune des barres de verrouillage de ladite paire comprenant une première fente, une deuxième fente, une troisième fente et une quatrième fente ;
dans lequel ladite première fente, ladite troisième fente et ladite quatrième fente sont orientées horizontalement le long de chacune respective des barres de verrouillage de ladite paire ;
dans lequel ladite troisième fente est orientée verticalement pour réunir ladite deuxième fente et ladite quatrième fente, formant une ouverture continue au sein de chacune respective des barres de verrouillage de ladite paire ; et
chacune des barres de verrouillage de ladite paire étant configurée pour verrouiller l'un respectif des assemblages en ciseaux de ladite paire à une largeur inférieure à leur largeur d'origine lorsqu'ils se trouvent dans ladite première orientation de remorque par l'intermédiaire de ladite première fente, de ladite deuxième fente, de ladite troisième fente et de ladite quatrième fente.

3. - Système selon la revendication 1, comprenant en outre :
au moins une extension de plancher de scène configurée pour être placée de façon adjacente audit plancher de scène ;
ladite extension de plancher de scène comprenant un outil d'extension de plancher et un tube télescopique ;
ladite extension de plancher de scène étant configurée pour être déroulée et placée de façon adjacente audit plancher de scène par l'intermédiaire dudit outil d'extension de plancher et dudit tube télescopique ;
ledit outil d'extension de plancher de scène étant configuré pour être retiré et remplacé par un axe à épaulement configuré pour fixer ladite extension de plancher de scène en place parallèlement audit plancher de scène ; et
une butée d'extension configurée pour fixer ladite extension de plancher de scène à une extrémité distale de celui-ci, une extrémité proximale de celui-ci étant placée de façon adjacente audit plancher de scène.

4. - Système selon la revendication 1, comprenant en outre :
ledit plancher de scène ayant une dimension de vingt pieds par seize pieds ;
ledit ensemble scène mobile présentant une hauteur totale remorquée de six pieds et huit pouces lorsqu'il se trouve dans ladite première orientation de remorque ;
ledit ensemble scène mobile présentant en outre une longueur remorquée de vingt-six pieds lorsqu'il se trouve dans ladite première orientation de remorque ; et
ledit ensemble scène mobile comprenant en outre un coupleur d'attelage de pare-chocs standard.

5. - Système selon la revendication 4, dans lequel ledit coupleur d'attelage de pare-chocs est configuré pour être rangé, ce qui réduit ainsi ladite longueur remorquée à vingt-trois pieds.
